# EUROPEAN PATENT SPECIFICATION

(11) **EP 3 130 524 B1**
(45) Date of publication and mention of the grant of the patent: **26.09.2018**
(21) Application number: 16175006.2
(22) Date of filing: 17.06.2016
(51) Int. Cl.: B62B 5/06, B62B 7/12, B62B 9/20, B62B 1/00, B62B 1/12, B62B 7/06

(54) **BABY STROLLER CAPABLE OF BEING FOLDED INTO DRAW-BAR VEHICLE**
IN EIN ZUGSTANGENFAHRZEUG FALTBARER KINDERWAGEN
POUSSETTE POUVANT ÊTRE PLIÉE EN VÉHICULE À BARRE DE TRACTION

(30) Priority: 11.08.2015 CN 201520600605 U
(43) Date of publication of application: 15.02.2017
(73) Proprietor: Dongguan Master Kids Products Co., Ltd., Guangdong 523462 (CN)
(72) Inventor: Zuo, Jiangwen, 523462 Dongguan (CN); Zhang, Yiliang, 523462 Dongguan (CN)
(74) Representative: Karakatsanis, Georgios

(56) References cited:
- EP-A1- 2 243 683
- DE-A1-102007 037 588
- US-A- 5 884 920
- US-A1- 2012 261 908

## Description

### FIELD OF THE INVENTION

The invention relates to the technical field of baby stroller products, and in particular to a baby stroller capable of being folded into a draw-bar vehicle.

### BACKGROUND OF THE INVENTION

At present, baby strollers are moving carrying tools designed for babies, and baby strollers bring convenience to adults carrying babies when going out, and are well received by consumers.

A baby stroller in a conventional art usually includes: joint groups, as well as a front leg tube, rear leg tube, seat frame, handrail and pushing handle bar, which are mounted on the joint groups, front wheels and rear wheels are arranged on the front leg tube and the rear leg tube respectively, and a pushing handle is arranged on the pushing handle bar. When the baby stroller is used, the front leg tube, the rear leg tube, the seat frame, the handrail and the pushing handle bar may be unfolded, and a seat cover may be mounted on the seat frame to seat a baby. When the baby stroller is not used, the front leg tube, the rear leg tube, the seat frame, the handrail and the pushing handle bar may be folded for storage.

The baby stroller in the conventional art is undiversified in function, and is only used for seating the baby or containing light things. In addition, when the baby grows up, the baby stroller is usually discarded in a broom closet and may not be used any more, which may cause resource waste.

Document DE 10 2007 037 588 A1 discloses a baby stroller capable of being folded into a draw-bar vehicle, comprising a front leg tube, a rear leg tube pivotally connected to the front leg tube that may be folded on the front leg tube, a seat frame and a handrail. Furthermore the known baby stroller comprises a pushing handle bar which is mounted on the rear leg tube through a first joint group and a pushing handle which is mounted on the pushing handle bar through a second joint group and may be folded relative to the pushing handle bar, wherein front wheels and rear wheels are correspondingly arranged at a tail end of the front leg tube and a tail end of the rear leg tube respectively. After the rear leg tube, the seat frame, the handrail and the pushing handle bar are folded on the front leg tube, the pushing handle is upwards bent relative to the pushing handle bar through the second joint group to form an comprised angle between the pushing handle and the pushing handle bar.

Document EP 2243683 A1 discloses a stroller for transporting a sitting child comprising a frame, vertical supports extending upwards above the frame and suitable for supporting a child seat, and one or two front wheels and two hind wheels attached via wheel arms to the frame, the frame comprising a first frame and a second frame coupled by a hinge axis around which the first frame and second frame can rotate between a sideways extending position and a folded position and wherein a central frame shaft couples the front wheels to the frame and forms the hinge axis.

### SUMMARY OF THE INVENTION

A purpose of the invention is to overcome shortcomings of the conventional art and provide a baby stroller capable of being folded into a draw-bar vehicle.

In order to solve the technical problem, the invention as defined in claim 1 is implemented by the following technical solution: a baby stroller capable of being folded into a draw-bar vehicle includes a front leg tube, a rear leg tube which is pivotally connected to the front leg tube and may be folded on the front leg tube, a seat frame and a handrail; and a pushing handle bar which is mounted on the rear leg tube through a first joint group and a pushing handle which is mounted on the pushing handle bar through a second joint group and may be folded relative to the pushing handle bar, wherein front wheels and rear wheels are correspondingly arranged at a tail end of the front leg tube and a tail end of the rear leg tube respectively, and after the rear leg tube, the seat frame, the handrail and the pushing handle bar are folded on the front leg tube, the pushing handle is upwards bent relative to the pushing handle bar through the second joint group to form an included angle of 70° to 110° between the pushing handle and the pushing handle bar. According to the invention a pull-out draw bar is arranged in the front leg tube, and the draw bar is pulled out to form the draw-bar vehicle.

Furthermore, in the technical solution, after the pushing handle is upwards bent relative to the pushing handle bar through the second joint group to form the included angle of 80° to 100° between the pushing handle and the pushing handle bar, the pushing handle and the pushing handle bar form an L-shaped support frame.

Furthermore, in the technical solution, a box body is connected to the support frame in a sleeving manner.

Furthermore, in the technical solution, the handrail and the rear leg tube are connected with the front leg tube through a connecting rod structure.

Furthermore, in the technical solution, the connecting rod structure includes sliding sleeves which form sleeving connection with the front leg tube in a sliding manner and first and second connecting rods which are pivotally connected to the sliding sleeves, and tail ends of the first and second connecting rods are correspondingly and pivotally connected to the handrail and the rear leg tube respectively.

Furthermore, in the technical solution, a locking device is arranged in the second joint group, and an unlocking button of the locking device is arranged on an outer side of the second joint group.

Furthermore, in the technical solution, the draw bar is arranged at the tail end of the front leg tube.

Furthermore, in the technical solution, the sliding sleeves are provided with locking devices, and the locking devices are provided with unlocking buttons.

The technical solution has technical effects as follows:
the baby stroller has a function the same as that of a baby stroller in the conventional art, but also may be folded into the draw-bar vehicle to be endowed with a function of a draw-bar vehicle in the conventional art, and is convenient to operate, so that the invention has extremely high market competitiveness. In addition, after being folded into the draw-bar vehicle, the baby stroller is smaller in size and more convenient to use, and may be carried aboard. Moreover, when a baby grows up, the baby stroller may be used as a draw-bar vehicle, so that the aim of making the best use is fulfilled, and unnecessary waste is avoided.

### BRIEF DESCRIPTION OF THE DRAWINGS

Fig. 1 is an unfolded three-dimensional diagram of the invention;
Fig. 2 is an unfolded side view of the invention;
Fig. 3 is a three-dimensional diagram of the invention after folding into a draw-bar vehicle;
Fig. 4 is a side view of the invention after folding into a draw-bar vehicle; and
Fig. 5 is a diagram of the invention in a folded state after folding into a draw-bar vehicle.

### DETAILED DESCRIPTION OF THE PREFERRED EMBODIMENTS

The invention will be specifically described below with reference to a specific embodiment.

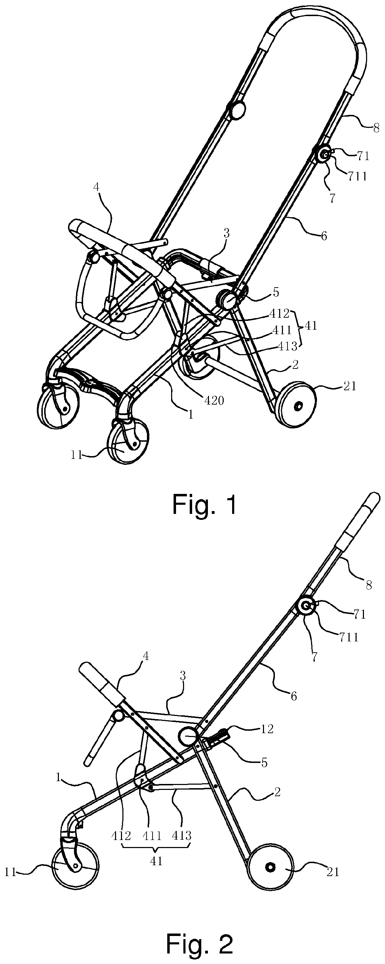

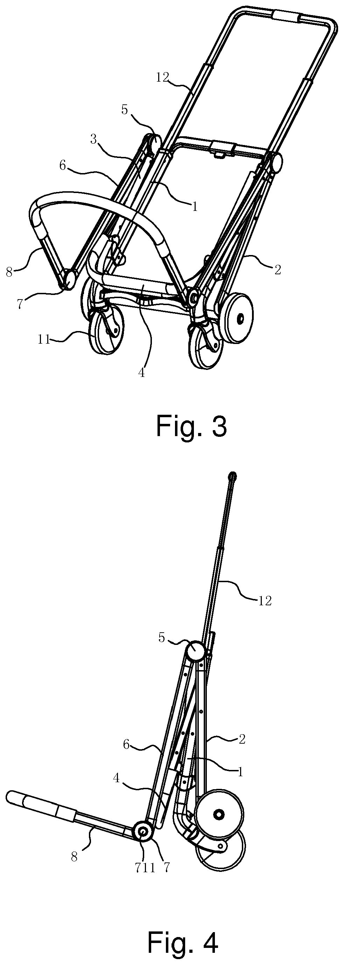

Embodiment: as shown in Fig. 1 to Fig. 4, a baby stroller capable of being folded into a draw-bar vehicle includes a front leg tube 1, a rear leg tube 2 which is pivotally connected with the front leg tube 1 and may be folded on the front leg tube 1, a seat frame 3, a handrail 4, a pushing handle bar 6 which is mounted on the rear leg tube 2 through a first joint group 5 and a pushing handle 8 which is mounted on the pushing handle bar 6 through a second joint group 7 and may be folded relative to the pushing handle bar 6, front wheels 11 and rear wheels 21 are correspondingly arranged at a tail end of the rear leg tube 2 and a front end of the front leg tube 1, and during normal use, the rear leg tube 2, the seat frame 3, the handrail 4 and the pushing handle bar 6 are unfolded relative to the front leg tube 1 and the seat frame 3 is sleeved with a seat to form an integrated baby stroller for seating a baby. In addition, after the rear leg tube 2, the seat frame 3, the handrail 4 and the pushing handle bar 6 are folded on the front leg tube 1, the pushing handle 8 is bent by about 90° (which may also be any value between 60° and 145°) relative to the pushing handle bar 6 through the second joint group 7 and a draw bar 12 is pulled out to form the draw-bar vehicle.

The pull-out draw bar 12 is arranged in the front leg tube 1, and the draw bar 12 may be collected in the front leg tube 1 so as not to influence normal use of the baby stroller when being not required to be used. In the embodiment, the draw bar 12 is arranged at a tail end of the front leg tube.

As an improvement: the handrail 4 and the rear leg tube 2 are connected with the front leg tube 1 through a connecting rod structure 41, and the connecting rod structure 41 may form certain support to the handrail 4, the rear leg tube 2 and the front leg tube 1 when the baby stroller are unfolded for use, and may link the handrail 4 and the rear leg tube 2 to rapidly fold the handrail 4 and the rear leg tube 2 on the front leg tube 1 when the baby stroller is required to be folded.

The connecting rod structure 41 includes sliding sleeves 411 which form sleeving connection with the front leg tube 1 in a sliding manner and first and second connecting rods 412 and 413 pivotally connected to the sliding sleeves 411, and tail ends of the first and second connecting rods 412 and 413 are pivotally connected to the handrail 4 and the rear leg tube 2 respectively.

The sliding sleeves 411 are provided with locking devices 420, and the locking devices 420 are provided with unlocking buttons.

A locking device 71 is arranged in the second joint group 7, and an unlocking button 711 of the locking device 71 is arranged on an outer side of the second joint group 7. When the pushing handle 8 is required to be bent relative to the pushing handle bar 6, the unlocking button 711 may be pressed to unlock the locking device 71 to make the second joint group 7 rotatable, and when the unlocking button 711 is released, the locking device 71 enters a locked state again, and at this moment, the second joint group 7 may not rotate.

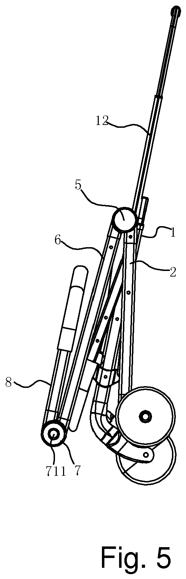

When the baby stroller is required to be folded into the draw-bar vehicle, after the rear leg tube 2, the seat frame 3, the handrail 4 and the pushing handle bar 6 are folded on the front leg tube 1, the unlocking button 711 on the outer side of the second joint group 7 is pressed, the pushing handle 8 is bent by about 90° relative to the pushing handle bar 6 by rotating the second joint group 7, then the unlocking button 711 is released to lock and fix the pushing handle 8 relative to the pushing handle bar 6 and make the pushing handle 8 which is bent by about 90° form an L-shaped support frame with the pushing handle bar 6, and finally, the draw bar 12 is pulled out to form the draw-bar vehicle, wherein a carrying position for supporting a box body or another object with a large size is formed on the support frame. In addition, in order to enable the draw-bar vehicle to contain more objects, the box body for containing the objects is connected to the support frame in a sleeving manner. Wherein, the baby stroller may carry objects lighter than 20KG after being folded into the draw-bar vehicle; and moreover, the pushing handle 8 may be folded on the pushing handle bar 6, so that the baby stroller has a smaller structure, referring to Fig. 5, so as to be convenient to store.

The baby stroller has a function the same as that of a baby stroller in the conventional art, but also may be folded into the draw-bar vehicle to be endowed with a function of a draw-bar vehicle in the conventional art, and is convenient to operate, so that the invention has extremely high market competitiveness. In addition, after being folded into the draw-bar vehicle, the baby stroller is smaller in size and more convenient to use, and may be carried aboard. Moreover, when a baby grows up, the baby stroller may be used as a draw-bar vehicle, so that the aim of making the best use is fulfilled, and unnecessary waste is avoided.

## Claims

1. A baby stroller capable of being folded into a draw-bar vehicle, comprising a front leg tube (1), a rear leg tube (2) which is pivotally connected to the front leg tube (1) and may be folded on the front leg tube (1), a seat frame (3) and a handrail (4); and a pushing handle bar (6) which is mounted on the rear leg tube (2) through a first joint group (5) and a pushing handle (8) which is mounted on the pushing handle bar (6) through a second joint group (7) and may be folded relative to the pushing handle bar (6), wherein front wheels (11) and rear wheels (21) are correspondingly arranged at a tail end of the front leg tube (1) and a tail end of the rear leg tube (2) respectively, and after the rear leg tube (2), the seat frame (3), the handrail (4) and the pushing handle bar (6) are folded on the front leg tube (1), the pushing handle (8) can be bent upwards relative to the pushing handle bar (6) through the second joint group (7) to form an comprised angle of 70° to 110° between the pushing handle (8) and the pushing handle bar (6), **characterized in that** a pull-out draw bar (12) is arranged in the front leg tube (1) and that the draw bar (12) is adapted to be pulled out to form the draw-bar vehicle.

2. The baby stroller capable of being folded into the draw-bar vehicle according to claim 1, wherein, after the pushing handle (8) is upwards bent relative to the pushing handle bar (6) through the second joint group (7) to form the comprised angle of 80° to 100° between the pushing handle (8) and the pushing handle bar (6), the pushing handle (8) and the pushing handle bar (6) form an L-shaped support frame.

3. The baby stroller capable of being folded into the draw-bar vehicle according to claim 2, wherein a box body is connected to the support frame in a sleeving manner.

4. The baby stroller capable of being folded into the draw-bar vehicle according to any one of claims 1 to 3, wherein the handrail (4) and the rear leg tube (2) are connected with the front leg tube (1) through a connecting rod structure (41).

5. The baby stroller capable of being folded into the draw-bar vehicle according to claim 4, wherein the connecting rod structure (41) comprises sliding sleeves (411) which form sleeving connection with the front leg tube (1) in a sliding manner and first and second connecting rods (412, 413) which are pivotally connected to the sliding sleeves (411), and tail ends of the first and second connecting rods (412, 413) are correspondingly and pivotally connected to the handrail (4) and the rear leg tube (2) respectively.

6. The baby stroller capable of being folded into the draw-bar vehicle according to any one of claims 1 to 3, wherein a locking device (71) is arranged in the second joint group (7), and an unlocking button (711) of the locking device (71) is arranged on an outer side of the second joint group (7).

7. The baby stroller capable of being folded into the draw-bar vehicle according to claim 1, wherein the draw bar (12) is arranged at the tail end of the front leg tube.

8. The baby stroller capable of being folded into the draw-bar vehicle according to claim 5, wherein the sliding sleeves (411) are provided with locking devices (420), and the locking devices (420) are provided with unlocking buttons.

## Patentansprüche

1. Kinderwagen, der zu einem Zugstangenwagen zusammenklappbar ist, umfassend ein vorderes Beinrohr (1), ein hinteren Beinrohr (2), das schwenkbar mit dem vorderen Beinrohr (1) verbunden ist und an dem vorderen Beinrohr (1) zusammengeklappt werden kann, einen Sitzrahmen (3) und einen Handlauf (4); und eine Schiebegriffstange (6), die über eine erste Gelenkgruppe (5) an dem hinteren Beinrohr (2) angebracht ist, und einen Schiebegriff (8), der über eine zweite Gelenkgruppe (7) an der Schiebegriffstange (6) angebracht ist und relativ zur Schiebegriffstange (6) zusammengeklappt werden kann, wobei die Vorderräder (11) und Hinterräder (21) entsprechend an einem hinteren Ende des vorderen Beinrohres (1) bzw. einem hinteren Ende des hinteren Beinrohres (2) angeordnet sind, und nachdem das hintere Beinrohr (2), der Sitzrahmen (3), der Handlauf (4) und die Schiebegriffstange (6) an dem vorderen Beinrohr (1) zusammengeklappt werden, kann der Schiebegriff (8) relativ zu der Schiebegriffstange (6) durch die zweite Gelenkgruppe (7) nach oben gebogen werden, um einen zwischen dem Schiebegriff (8) und der Schiebegriffstange (6) eingeschlossenen Winkel von 70° bis 110° zu bilden, **dadurch gekennzeichnet, dass** in dem vorderen Beinrohr (1) eine ausziehbare Zugstange (12) angeordnet ist und dass die Zugstange (12) eingerichtet ist, zur Bildung des Zugstangenwagens ausgezogen zu werden.

2. Kinderwagen, der in den Zugstangenwagen zusammenklappbar ist, nach Anspruch 1, wobei, nachdem der Schiebegriff (8) relativ zu der Schiebegriffstange (6) durch die zweite Gelenkgruppe (7) nach oben gebogen ist, um den zwischen dem Schiebegriff (8) und der Schiebegriffstange (6) eingeschlossenen Winkel von 80° bis 100° zu bilden, der Schiebegriff (8) und die Schiebegriffstange (6) einen L-förmigen Stützrahmen bilden.

3. Kinderwagen, der in den Zugstangenwagen zusammenklappbar ist, nach Anspruch 2, wobei ein Kofferaufbau mit dem Stützrahmen in hülsenartiger Weise verbunden ist.

4. Kinderwagen, der in den Zugstangenwagen zusammenklappbar ist, nach einem der Ansprüche 1 bis 3, wobei der Handlauf (4) und das hintere Beinrohr (2) über eine Verbindungsstangenstruktur (41) mit dem vorderen Beinrohr (1) verbunden sind.

5. Kinderwagen, der in den Zugstangenwagen zusammenklappbar ist, nach Anspruch 4, wobei die Verbindungsstangenstruktur (41) Schiebehülsen (411), die gleitend eine hülsenartige Verbindung mit dem vorderen Beinrohr (1) bilden und erste und zweite Verbindungsstangen (412, 413) aufweisen, die mit den Schiebehülsen (411) schwenkbar verbunden sind, und die hinteren Enden der ersten und zweiten Verbindungsstangen (412, 413) entsprechend und schwenkbar mit dem Handlauf (4) bzw. dem hinteren Beinrohr (2) verbunden sind.

6. Kinderwagen, der in den Zugstangenwagen zusammenklappbar ist, nach einem der Ansprüche 1 bis 3, wobei in der zweiten Gelenkgruppe (7) eine Verriegelungseinrichtung (71) angeordnet ist und an einer Außenseite der zweiten Gelenkgruppe (7) ein Entriegelungsknopf (711) der Verriegelungseinrichtung (71) angeordnet ist.

7. Kinderwagen, der in den Zugstangenwagen zusammenklappbar ist, nach Anspruch 1, wobei die Zugstange (12) an dem hinteren Ende des vorderen Beinrohres angeordnet ist.

8. Kinderwagen, der in den Zugstangenwagen zusammenklappbar ist, nach Anspruch 5, wobei die Schiebehülsen (411) mit Verriegelungseinrichtungen (420) versehen sind und die Verriegelungseinrichtungen (420) mit Entriegelungsknöpfen versehen sind.

## Revendications

1. Poussette capable d'être pliée dans un véhicule à barre d'étirage, comprenant un tube de jambe avant (1), un tube de jambe arrière (2) qui est relié de manière pivotante au tube de jambe avant (1) et qui peut être plié sur le tube de jambe avant (1), une armature de siège (3) et une main courante (4) ; et un guidon de poussée (6) qui est monté sur le tube de jambe arrière (2) grâce à un premier groupe conjoint (5) et une poignée de poussée (8) qui est montée sur le guidon de poussée (6) grâce à un second groupe conjoint (7) et qui peut être plié par rapport au guidon de poussée (6), dans lequel les roues avant (11) et les roues arrière (21) sont agencées de manière correspondante au niveau d'une extrémité de queue du tube de jambe avant (1) et au niveau d'une extrémité de queue du tube de jambe arrière (2) respectivement, et après que le tube de jambe arrière (2), l'armature de siège (3), la main courante (4) et le guidon de poussée (6) soient pliés sur le tube de jambe avant (1), la barre de poussée (8) peut être déformée vers le haut par rapport au guidon de poussée (6) grâce au second groupe conjoint (7) pour former un angle compris entre 70° et 110° entre la barre de poussée (8) et le guidon de poussée (6), **caractérisé en ce que** la barre d'étirage de retrait (12) est agencée dans le tube de jambe avant (1) et **en ce que** la barre d'étirage (12) est adaptée pour être retirée afin de former le véhicule à barre d'étirage.

2. Poussette capable d'être pliée dans le véhicule à barre d'étirage selon la revendication 1, dans laquelle, après que la poignée de poussée (8) soit déformée vers le haut par rapport au guidon de poussée (6) grâce au second groupe conjoint (7) pour former l'angle compris entre 80° et 100° entre la barre de poussée (8) et le guidon de poussée (6), la poignée de poussée (8) et le guidon de poussée (6) forment une armature de support en forme de L.

3. Poussette capable d'être pliée dans le véhicule à barre d'étirage selon la revendication 2, dans laquelle un corps de boîte est relié à l'armature de support selon un mode de manchonnage.

4. Poussette capable d'être pliée dans le véhicule à barre d'étirage selon l'une quelconque des revendications 1 à 3, dans laquelle la main courante (4) et le tube de jambe arrière (2) sont reliés au tube de jambe avant (1) grâce à une structure de tige de connexion (41).

5. Poussette capable d'être pliée dans le véhicule à barre d'étirage selon la revendication 4, dans laquelle la structure de tige de connexion (41) comprend des manchons coulissants (411) qui forment un raccordement en manchonnage avec le tube de jambe avant (1) d'une manière coulissante et des première et seconde tiges de connexion (412, 413) qui sont reliées de manière pivotante aux manchons coulissants (411), et des extrémités de queue des première et seconde tiges de connexion (412, 413) sont reliées de manière correspondante et pivotante à la main courante (4) et au tube de jambe arrière (2) respectivement.

6. Poussette capable d'être pliée dans le véhicule à barre d'étirage selon l'une quelconque des revendications 1 à 3, dans laquelle un dispositif de verrouillage (71) est agencé dans le second groupe conjoint (7), et un bouton de déverrouillage (711) du dispositif de verrouillage (71) est agencé sur un côté externe du second groupe conjoint (7).

7. Poussette capable d'être pliée dans le véhicule à barre d'étirage selon la revendication 1, dans laquelle la barre d'étirage (12) est agencée au niveau de l'extrémité de queue du tube de jambe avant.

8. Poussette capable d'être pliée dans le véhicule à barre d'étirage selon la revendication 5, dans laquelle les manchons coulissants (411) sont munis de dispositifs de verrouillage (420), et les dispositifs de verrouillage (420) sont munis de boutons de déverrouillage.
